# EUROPÄISCHE PATENTANMELDUNG

(11) **EP 4 817 915 A1**
(43) Veröffentlichungstag der Anmeldung: **07.10.2026**
(21) Anmeldenummer: 26170368.0
(22) Anmeldetag: 02.04.2026
(51) Int. Cl.: B60K 1/00, B60K 5/00, B60K 5/12

(54) **ANTRIEBSAGGREGAT, KRAFTFAHRZEUGAUFBAU SOWIE KRAFTFAHRZEUG**

(30) Priorität: 03.04.2025 DE 102025113020
(71) Anmelder: Volkswagen Aktiengesellschaft, 38440 Wolfsburg (DE)
(72) Erfinder: DANSCHACHER, Markus, 38440 Wolfburg (DE); FRITSCHE, Erik, 38440 Wolfburg (DE); OSTERWALD, Christoph, 38440 Wolfburg (DE); HALUPKA, Wolfram, 38440 Wolfburg (DE)
(74) Vertreter: Massinger, Marco

(57) **Zusammenfassung**

Ein Antriebsaggregat (2) eines Kraftfahrzeugs zur Anordnung an einem Kraftfahrzeugaufbau (3) umfassend ein Aggregatgehäuse (2a) mit einem integral mit dem Aggregatgehäuse (2a) ausgebildeten oder stoffschlüssig an das Aggregatgehäuse (2a) angeschlossenen Kragarm (11) zur Abstützung des Aggregatgehäuses (2a) gegen den Kraftfahrzeugaufbau (3). Der integral mit dem Aggregatgehäuse (2a) ausgebildete oder stoffschlüssig an dieses angeschlossene Kragarm (11) steht von dem Aggregatgehäuse (2a) ab. Der Kragarm (11) weist zwischen einem Anschlussbereich (13) des Kragarms (11) an das Aggregatgehäuse (2a) und einem Abstützende (14) des Kragarms (11), mit welchem der Kragarm (11) am Kraftfahrzeugaufbau (3) abstützbar ist, eine Geometrieveränderung (11a, 11a', 11a") auf, welche bei einer Belastung des Kragarms (11) mit einer Längskraft in Richtung von dem Abstützende (14) zu dem Anschlussbereich (13) oder umgekehrt, eine Sollknickstelle oder Sollbruchstelle bildet, welche bei Überschreiten einer Schwelle für die Längskraft ausknickt oder bricht. Der Kragarm (11) kann alternativ auch in eine Kraftfahrzeugaufbaukomponente (3a) des Kraftfahrzeugaufbaus (3) integriert sein. Weiterhin wird ein entsprechend ausgerüstetes Kraftfahrzeug (1) angegeben.

## Beschreibung

Die Erfindung bezieht sich auf das Gebiet der Kraftfahrzeugtechnik und hier insbesondere auf die Abstützung eines Antriebsaggregats an einem Kraftfahrzeugaufbau.

Weiterhin bezieht sich die Erfindung auf ein Kraftfahrzeug mit einer solchen Abstützung.

Im Crashfall stellt das Antriebsaggregat einen kompakten, harten Block dar, der wenig geeignet ist, Crashenergie zu absorbieren. Im Hinblick auf die Crashsicherheit wird daher unter anderem angestrebt, ein kritisches Vordringen des Antriebsaggregats in Richtung der Fahrgastzelle oder empfindlicher Fahrzeugkomponenten möglichst zu vermeiden. So können beispielsweise die Aggregatlager, über welche das Antriebsaggregat gegen den Fahrzeugaufbau abgestützt ist, derart ausgelegt werden, dass sich bei einem Frontalaufprall das Antriebsaggregat unter das Fahrzeug oder in einen sicheren Bereich verschiebt. Ferner ist bekannt, das Antriebsaggregat durch Sollbruchstellen oder Sollknickstellen im Bereich der Aggregatlager gezielt auszuklinken.

Technische Lösungen zur Abstützung eines Antriebsaggregats an einem Kraftfahrzeugaufbau sind aus DE 10 2022 204 921 A1, DE 10 2017 206 391 A1, DE 10 2020 113 946 A1 und DE 10 2019 216 990 A1 bekannt. Aggregatlager mit dezidierten Sollknickstellen oder Sollbruchstellen sind aus DE 26 15 503 A und JP 2004-255 967 A bekannt.

Das Aggregatlager ist hierbei stets eine zusätzliche Komponente, die bei der Fahrzeugmontage eigens sowohl mit dem Antriebsaggregat als auch mit dem Fahrzeugaufbau gekoppelt werden muss. Es gibt also üblicherweise zwei Schnittstellen, nämlich eine erste Schnittstelle zwischen dem Aggregatlager und dem Antriebsaggregat sowie eine zweite Schnittstelle zwischen dem Aggregatlager und dem Kraftfahrzeugaufbau. Der Montageaufwand ist entsprechend beträchtlich.

Der vorliegenden Erfindung liegt die Aufgabe zu Grunde, unter Beibehaltung einer crashweichen Anbindung des Antriebsaggregats an den Kraftfahrzeugaufbau diesen Montageaufwand zu vermindern.

Diese Aufgabe wird durch ein Antriebsaggregat gemäß Patentanspruch 1, einen Kraftfahrzeugaufbau gemäß Patentanspruch 4 sowie ein Kraftfahrzeug gemäß Patentanspruch 14 gelöst. Besondere Ausführungsarten der Erfindung sind Gegenstand weiterer Patentansprüche.

Das erfindungsgemäße Antriebsaggregat umfasst ein Aggregatgehäuse mit einem integral mit dem Aggregatgehäuse ausgebildeten oder stoffschlüssig an das Aggregatgehäuse angeschlossenen Kragarm zur Abstützung des Aggregatgehäuses gegen den Kraftfahrzeugaufbau. Dabei steht der integral mit dem Aggregatgehäuse ausgebildete oder stoffschlüssig an dieses angeschlossene Kragarm von dem Aggregatgehäuse ab. Zudem weist der Kragarm zwischen einem Anschlussbereich des Kragarms an dem Aggregatgehäuse und einem Abstützende des Kragarms, mit welchem der Kragarm am Kraftfahrzeugaufbau abstützbar ist, eine Geometrieveränderung auf, welche bei einer Belastung des Kragarms mit einer Längskraft in Richtung von dem Abstützende zu dem Anschlussbereich oder umgekehrt, eine Sollknickstelle oder Sollbruchstelle bildet, welche bei Überschreiten einer Schwelle für die Längskraft ausknickt oder bricht.

Der Kragarm ist vorliegend Bestandteil eines Aggregatlagers, wobei im Unterschied zu einer einfachen Lagerbuchse eine gewisse Kragarmlänge für die Sollknickstelle oder Sollbruchstelle bereitgestellt wird. Zudem sorgt der Kragarm für eine Distanzierung im Hinblick auf einen etwaigen Verschiebweg. Durch dessen Integration in das Aggregatsgehäuse wird der Aufwand bei der Fahrzeugmontage erheblich reduziert, da die Handhabungsschritte für eine entsprechende Schnittstelle des Aggregatlagers gänzlich entfallen.

Bevorzugt ist der Kragarm an das Aggregatgehäuse angegossen. Dies lässt sich beispielsweise in einem Druckgießverfahren ohne großen Zusatzaufwand verwirklichen. Das Aggregatgehäuse und der Kragarm werden dabei gleichzeitig gegossen.

Es ist jedoch auch möglich, den Kragarm an das Aggregatgehäuse anzuschweißen, was der eigentlichen Fahrzeugmontage vorgelagert und gegebenenfalls automatisiert erfolgen kann.

Auch andere Fertigungstechniken zur Integration des Kragarms in das Aggregatsgehäuse, welche eine individuelle Befestigung mittels separate Befestigungsmitteln wie beispielsweise Schrauben vermeiden, kommen grundsätzlich infrage.

Gemäß eines weiteren Lösungsansatzes ist der Kragarm nicht in das Antriebsaggregat, sondern vielmehr in den Kraftfahrzeugaufbau, insbesondere eine Kraftfahrzeugaufbaukomponente desselben integriert, so dass auch hier eine Schnittstelle bei der Fahrzeugmontage entfällt.

Entsprechend weist eine Kraftfahrzeugaufbaukomponente einen integral mit der Kraftfahrzeugaufbaukomponente ausgebildeten oder stoffschlüssig an die Kraftfahrzeugaufbaukomponente angeschlossenen Kragarm zur Abstützung des Antriebsaggregats gegen die Kraftfahrzeugaufbaukomponente auf, wobei der integral mit der Kraftfahrzeugaufbaukomponente ausgebildete oder stoffschlüssig an diese angeschlossene Kragarm von der der Kraftfahrzeugaufbaukomponente absteht. Der Kragarm weist zwischen einem Anschlussbereich des Kragarms an der Kraftfahrzeugaufbaukomponente und einem Abstützende des Kragarms, mit welchem der Kragarm am Antriebsaggregat abstützbar ist, eine Geometrieveränderung auf, welche bei einer Belastung des Kragarms mit einer Längskraft in Richtung von dem Abstützende zu dem Anschlussbereich oder umgekehrt eine Sollknickstelle oder Sollbruchstelle bildet, welche bei Überschreiten einer Schwelle für die Längskraft ausknickt oder bricht.

Der Kragarm kann an die Kraftfahrzeugaufbaukomponente angeformt, angegossen oder angeschweißt oder anderweitig ohne die Notwendigkeit von separaten Befestigungsmittel integriert sein.

Im Crashfall wird eine auf das Antriebsaggregat einwirkende Kraft über den Kragarm in den Kraftfahrzeugaufbau abgeleitet, der bei Überschreiten einer vorgegebenen Schwelle ausknickt oder bricht. Hierdurch kann beispielsweise gewährleistet werden, dass ein am Kragarm vorgesehener Lagerkörper nicht als Rammdorn für in Stoßrichtung liegende Komponenten wirken kann. Diese werden entsprechend im Crashfall vor Beschädigung geschützt.

Der Kragarm ist dabei derart ausgelegt, dass dieser im bestimmungsgemäßen Betrieb des Kraftfahrzeugs auftretenden Betriebslasten standhält, das heißt weder einknickt noch bricht, und geeignet ist, das Antriebsaggregat gegen den Kraftfahrzeugaufbau abzustützen.

Das Antriebsaggregat kann beispielsweise ein Elektromotor zum Antrieb des Kraftfahrzeugs, ein Verbrennungskraftmotor, ein für den Motor vorgesehenes Getriebe, eine Einheit aus Motor und Getriebe oder dergleichen sein.

Gemäß einer besonderen Ausführungsart der vorliegenden Erfindung weist der Kragarm im Anschlussbereich eine geschlossene flächige Struktur auf. Hierdurch ergibt sich eine besonders stabile Anbindung an das Antriebsaggregat bzw. die Kraftfahrzeugaufbaukomponente, welche eine energieabsorbierende Deformation des Kragarms begünstigt.

Weiterhin kann die geschlossene flächige Struktur im Verlauf zum Abstützende hin in mehrere Finger auffächern. Dies reduziert zum einen Gewicht. Zum anderen ermöglicht ein solches Strebwerk eine Verbreiterung der Abstützbasis und damit stabile Anbindung für den Normalbetrieb. Überdies begünstigen die Finger bei einer Überlastung die Einleitung einer gezielten Deformation, welche durch Abstimmung der Finger untereinander gegebenenfalls zusätzlich in eine entsprechende Vorzugsrichtung geleitet werden kann.

Es hat sich gezeigt, dass es insbesondere von Vorteil ist, wenn die geschlossene flächige Struktur sich über mindestens ein Viertel der Länge des Kragarms, gemessen vom Anschlussbereich bis zum Abstützende, erstreckt.

Gemäß einer weiteren besonderen Ausführungsart kann der Kragarm aus einer Druckgusslegierung hergestellt sein. Druckgusslegierungen sind vergleichsweise spröde, so dass der Kragarm bei Überlastung zuverlässig bricht.

Gegebenenfalls kann der Kragarm auch aus Kunststoff hergestellt sein, um bei Überlastung gezielt zu versagen. Auch andere Materialen sind möglich. Letztlich sind diese durch das Bauteil bedingt, in welches der Kragarm integriert wird.

Gemäß einer weiteren besonderen Ausführungsart, welche insbesondere bei einer Integration in eine Kraftfahrzeugaufbaukomponente zum Tragen kommt, kann der Kragarm auch aus Blech bestehen. In diesem Fall wird der Kragarm bei Überlastung im Crashfall quer zu einer Verbindungslinie zwischen seinen Enden ausknicken, gegebenenfalls auch brechen.

Gemäß einer weiteren besonderen Ausführungsart wirkt der Kragarm an seinem Abstützende mit einer Lagerbuchse zusammen, deren Lagerachse quer zur Längserstreckung des Kragarms zwischen dem Anschlussbereich und dem Abstützende ist. Über die Lagerbuchse erfolgt beispielswiese eine akustische Entkopplung des Antriebsaggregats vom Kraftfahrzeugaufbau.

Die Geometrieveränderung des Kragarms kann beispielsweise einen wellen- oder stufenförmigen Versatz desselben in Richtung der Lagerachse umfassen. Dies gewährleistet im Unterschied zu einem einfachen Knickstab, welcher bei Überlastung irgendwo bricht, ein gezieltes Einknicken und/oder Brechen an einer vorgegebenen Stelle, womit die Deformation kontrollierbar bleibt.

Gemäß einer weiteren besonderen Ausführungsart weist der Kragarm an seinem Abstützende einen Lagerkörper mit einer Lagerbuchse auf. Die Lagerbuchse weist eine Lagerachse quer zur Längserstreckung des Kragarms zwischen dem Anschlussbereich und dem Abstützende auf. In diesem Fall ist also die Lagerbuchse Bestandteil des Kragarms. Ein mit der Lagerbuchse zusammenwirkender Lagerzapfen ist in diesem Fall an der anderen Komponente festgelegt.

Die Lagerbuchse kann an den Kragarm angegossen oder angeschweißt sein, wodurch sich ein großer Freiheitsgrad für die Ausgestaltung ergibt. Ferner ist es möglich, die Lagebuchse in den Kragarm einzupressen.

In Abwandlung hiervon kann der Kragarm jedoch an seinem Abstützende den Lagerzapfen, beispielsweise eine Gabel mit einem solchen aufweisen, wobei der Lagerzapfen sich quer zur Längserstreckung des Kragarms zwischen dem Anschlussbereich und dem Abstützende erstreckt und der Lagerzapfen in einer Lagerbuchse an der anderen Komponente gelagert ist.

Gemäß einer weiteren besonderen Ausführungsart stellt die Geometrieveränderung einen Versatz der Krafteinleitung zwischen dem Anschlussbereich und dem Abstützende dahingehend bereit, dass die Krafteinleitung am Anschlussbereich in einer ersten Ebene senkrecht zur Lagerachse der Lagerbuchse angeordnet ist, die aggregatseitige Krafteinleitung am Abstützende in einer zweiten Ebene senkrecht zur Lagerachse angeordnet ist und die erste Ebene und die zweite Ebene zueinander parallel sind und einen Versatz zueinander aufweisen.

In einer Ausführungsvariante kann die Lagerbuchse unmittelbar an einer Kraftfahrzeugaufbaukomponente, welcher vorliegend auch fahrzeugaufbaufeste Strukturen wie beispielsweise ein Hilfsrahmen oder Fahrschemel zugerechnet werden, befestigt sein. Gemäß einer weiteren besonderen Ausführungsart kann der Lagerkörper der Lagerbuchse jedoch eine dezidierte Befestigungskonsole aufweisen, welche ihrerseits Einrichtungen zur Befestigung am Fahrzeugaufbau aufweist. Die Lagerbuchse ist in diesem Fall an der Befestigungskonsole abgestützt. Über die Befestigungskonsole kann der Ort der Abstützung des Antriebsaggregats am Fahrzeugaufbau flexibler gewählt werden, so dass für die Ausgestaltung des Fahrzeugaufbaus, an welchem die Abstützung letztlich erfolgt, im Hinblick auf den Ort der Abstützung weniger stark Rücksicht genommen werden muss. Hierdurch reduziert sich der diesbezügliche Konstruktions- und Fertigungsaufwand.

Ferner kann die Lagerbuchse unter Zwischenschaltung eines Elastomerkörpers elastisch an der Befestigungskonsole abgestützt sein.

Die oben genannte Aufgabe wird weiterhin durch ein Kraftfahrzeug gemäß Patentanspruch 14 gelöst. Dieses umfasst ein Antriebsaggregat für den Antrieb des Kraftfahrzeugs, einen Kraftfahrzeugaufbau und eine Traktionsbatterie. Dabei ist entweder das Antriebsaggregat oder der Kraftfahrzeugaufbau in der vorstehend erläuterten Art und Weise mit einem Kragarm ausgebildet. Das Antriebsaggregat und der Kraftfahrzeugaufbau sind über den Kragarm miteinander gekoppelt. Überdies ist der Kragarm in Bezug auf eine Kraftfahrzeuglängsrichtung zwischen dem Antriebsaggregat und der Traktionsbatterie angeordnet ist.

Hierdurch wird die Traktionsbatterie des Kraftfahrzeugs im Fall einer crashbedingten Krafteinwirkung auf das Antriebsaggregat gegen Beschädigungen wirkungsvoll geschützt, da der Kragarm bricht oder ausknickt, bevor die Festlegung der Abstützung am Abstützende versagen kann. Mit anderen Worten, die Schwelle für besagtes Ausknicken oder Brechen ist zweckmäßig unterhalb dem Niveau der Befestigungskraft der Abstützung und über dem Niveau der Betriebskräfte im bestimmungsgemäßen Betrieb des Kraftfahrzeugs gewählt.

Ein weiterer Vorteil dieser Anordnung besteht darin, dass, optional, die Abstützung über einen einzigen Kragarm zwischen dem Antriebsaggregat und der Traktionsbatterie erfolgen kann, da für die Positionierung der Abstützung auf eine Vorbeileitung von Stoßkräften an der Traktionsbatterie keine Rücksicht mehr genommen werden braucht. Auch ein Einbau zusätzlicher Crashelemente zum Schutz der Traktionsbatterie kann vermieden werden. Dies schließt jedoch nicht aus, auch mehrere Aggregatabstützungen der vorstehend erläuterten Art oder zusätzlich auch andere Aggregatlager zur Abstützung des Antriebsaggregats einzusetzen.

Die Abstützung des Antriebsaggregats kann derart am Kraftfahrzeug untergebracht sein, dass deren Kragarm an dem Lagerkörper von der Traktionsbatterie weg weist. Hierdurch wird gewährleistet, dass bei einer Kollision des Kraftfahrzeugs mit einem Hindernis, insbesondere in Fahrzeuglängsrichtung, der Kraftfluss etwaiger Stoßkräfte zunächst auf den Kragarm trifft, bevor dieser den Lagerkörper erreichen kann. Dadurch wird erreicht, dass der Kragarm zuverlässig ausklinkt, nämlich bricht oder ausknickt, bevor die Befestigung des Lagerkörpers versagen kann.

Weiterhin kann die Abstützung des Antriebsaggregats in Fahrzeughochrichtung über einem Lenkgetriebe liegend angeordnet sein. Insbesondere kann hierzu eine Befestigungskonsolen als Fahrzeugaufbaukomponente das Lenkgetriebe überbrücken und in Fahrzeuglängsrichtung sowohl vor als auch hinter dem Lenkgetriebe an einem Hilfsrahmen des Fahrzeugaufbaus festgelegt sein. Hierdurch wird ein zusätzlicher Versteifungseffekt am Fahrzeugaufbau erzielt.

Nachfolgend werden Wege zur Ausführung der Erfindung anhand von in der Zeichnung dargestellten Ausführungsbeispielen näher erläutert. Die Zeichnung zeigt in:
- Fig. 1: eine schematische Darstellung eines Kraftfahrzeugs von oben nach einem Ausführungsbeispiel der Erfindung,
- Fig. 2: eine räumliche Detailansicht der Abstützung eines Antriebsaggregats an einem Kraftfahrzeugaufbau nach einem Ausführungsbeispiel der Erfindung,
- Fig. 3: eine weitere räumliche Detailansicht der Abstützung des Antriebsaggregats am Kraftfahrzeugaufbau,
- Fig.4: eine Seitenansicht der Abstützung des Antriebsaggregats am Kraftfahrzeugaufbau mit Darstellung einer crashbedingten Krafteinwirkung in Fahrzeuglängsrichtung,
- Fig. 5: eine Ansicht zur Veranschaulichung der Ableitung einer crashbedingten Krafteinwirkung in Fahrzeuglängsrichtung,
- Fig. 6 a bis d: verschiedene Ausführungsvarianten für die Anordnung des Kragarms, und in
- Fig. 7 a bis c: verschiedene Ausführungsvarianten für die Ausgestaltung der Geometrieveränderung des Kragarms.

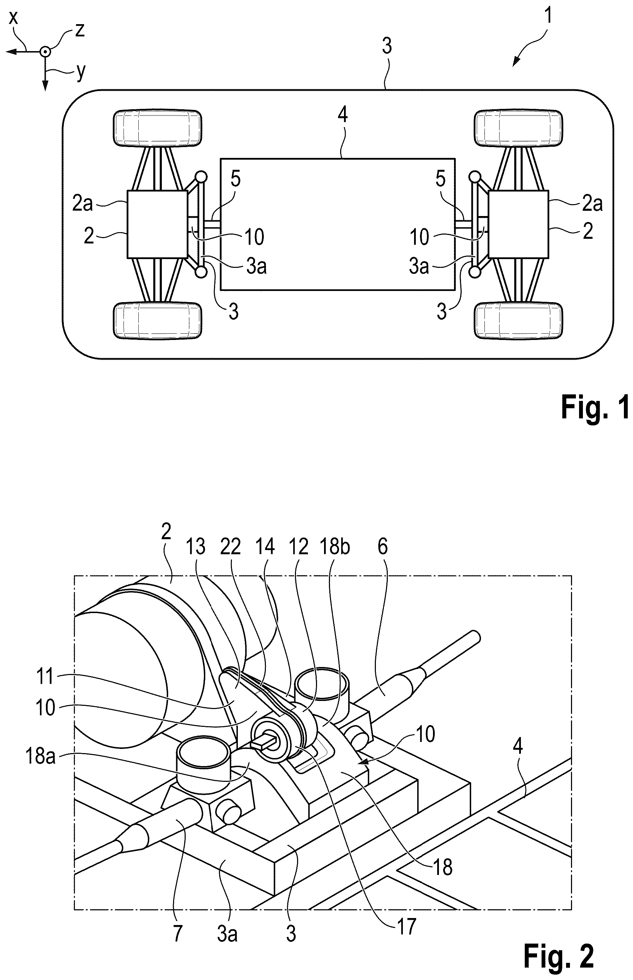

Das Ausführungsbeispiel zeigt in Fig. 1 in schematischer Darstellung ein Kraftfahrzeug 1, insbesondere Personenkraftfahrzeug, mit einem Antriebsaggregat 2 für den Antrieb des Kraftfahrzeugs 1, einem Kraftfahrzeugaufbau 3 und einer am Kraftfahrzeugaufbau 3 angeordneten Traktionsbatterie 4.

Dem Kraftfahrzeugaufbau 3 werden vorliegend auch fahrzeugaufbaufeste Strukturen wie beispielsweise ein Fahrschemel oder Hilfsrahmen 3a zugeordnet.

Bei dem in Fig. 1 dargestellten Ausführungsbeispiel ist das Antriebsaggregat 2 an einem in Vorwärtsfahrtrichtung vornliegenden Hilfsrahmen 3a angeordnet. Ein weiteres Antriebsaggregat 2 kann an einem in Vorwärtsfahrtrichtung hintenliegenden Hilfsrahmen 3a angeordnet sein. Die Traktionsbatterie 4 befindet sich bezogen auf die Fahrzeuglängsrichtung x zwischen den beiden vorgenannten Hilfsrahmen 3a des Kraftfahrzeugaufbaus 3.

Die Traktionsbatterie 4 ist über elektrische Leitungen 5 mit dem oder den Antriebsaggregaten 2 elektrisch verbunden, um diese mit Strom versorgen. Das beziehungsweise die Antriebsaggregate 2 sind vorzugsweise als Elektromotoren oder elektrische Getriebemotoren ausgebildet.

In Abwandlung des Ausführungsbeispiels kann als Antriebsaggregat 2 auch ein Verbrennungskraftmotor oder ein entsprechender Motorblock einschließlich Getriebe vorgesehen sein. Möglich ist ferner Verbrennungskraftmotor mit angeschlossenem Generator zum Laden der Traktionsbatterie 4.

Das Antriebsaggregat 2 weist ein Aggregatgehäuse 2a auf. Es ist über eine nachfolgend näher erläuterte Abstützungsstruktur 10 an einer Kraftfahrzeugaufbaukomponente 3b des Kraftfahrzeugaufbaus 3 abgestützt. Wie in Fig. 1 gezeigt, ist diese Abstützungsstruktur 10 in Fahrzeuglängsrichtung x zwischen dem Aggregat 2 und der Traktionsbatterie 4 angeordnet.

Vorliegend kommt im Bereich zwischen dem Antriebsaggregat 2 und der Traktionsbatterie 4 vorzugsweise lediglich eine einzige Abstützungsstruktur 10 zum Einsatz, die wiederum bezogen auf die Fahrzeugquerrichtung y bevorzugt in Fahrzeugmitte liegen kann.

Jedoch kann eine Abstützung im Bereich zwischen dem Antriebsaggregat 2 und der Traktionsbatterie 4 auch über mehrere, vorzugsweise gleichartige Abstützungsstrukturen 10 vorgenommen sein.

Das Antriebsaggregat 2 kann überdies über weitere Befestigungspunkte außerhalb des genannten Bereichs am Kraftfahrzeugaufbau 3 abgestützt sein.

Die Abstützungsstruktur 10 umfasst einen Kragarm 11 und kann ferner einen Lagerkörper 12 aufweisen.

Bei dem in Figur 1 dargestellten Ausführungsbeispiel ist der Kragarm 11 integral mit dem Aggregatgehäuse 2a ausgebildet oder stoffschlüssig an das Aggregatgehäuse 2a angeschlossen. Er dient zur Abstützung des Aggregatgehäuses 2a gegen den Kraftfahrzeugaufbau 3. Dabei steht der integral mit dem Aggregatgehäuse 2a ausgebildete oder stoffschlüssig an dieses angeschlossene Kragarm 11 von dem Aggregatgehäuse 2a ab.

Der Kragarm 11 weist einen Anschlussbereich 13 auf, mit dem dieser an das Aggregatsgehäuse 2a anschließt, sowie ein freies Ende, mit welchem der Kragarm 11 am Kraftfahrzeugaufbau 3 abstützbar ist. Letzteres wird im Folgenden auch als Abstützende 14 bezeichnet.

An dem freien Ende beziehungsweise Abstützende 14 ist besagter Lagerkörper 12 angeordnet.

Der Kragarm 11 ist zwischen dem Anschlussbereich 13 und dem Abstützende 14 derart ausgebildet, dass der Kragarm 11 unter Einwirkung einer Kraft F in Richtung von dem Anschlussbereich 13 zu dem Abstützende 14 oder umgekehrt im Crashfall bei Überschreiten einer vorgegebenen Schwelle für die Kraft F gezielt versagt, insbesondere ausknickt oder bricht.

Hierzu weist der Kragarm 11 insbesondere eine Geometrieveränderung 11a auf, welche bei einer Längsbelastung eine Sollknickstelle oder Sollbruchstelle bildet. Unter Überlast verformt sich der Kragarm 11, wobei durch die Sollknickstelle oder Sollbruchstelle ein kontrolliertes Ausknicken oder Brechen an definierter Stelle verursacht wird.

Die Schwelle für die Kraft F ist derart gewählt, dass der Kragarm 11 Betriebskräften im bestimmungsgemäßen Betrieb des Kraftfahrzeugs 1 standhält und geeignet ist, das Antriebsaggregat 2 dabei gegen den Kraftfahrzeugaufbau 3 abzustützen.

Die Schwelle für die Kraft F ist ferner derart gewählt, dass der Kragarm 11 bricht oder ausknickt, bevor die Befestigung des Lagerkörpers 12 am Kraftfahrzeugaufbau 3 versagt. Hierdurch wird gewährleistet, dass der Lagerkörper 12 im Crashfall unter Einwirkung einer Kraft mit einer signifikanten Komponente in Fahrzeuglängsrichtung x nicht in Richtung der Traktionsbatterie 4 vordringen kann, wodurch diese gegen etwaige Beschädigungen im Crashfall geschützt wird.

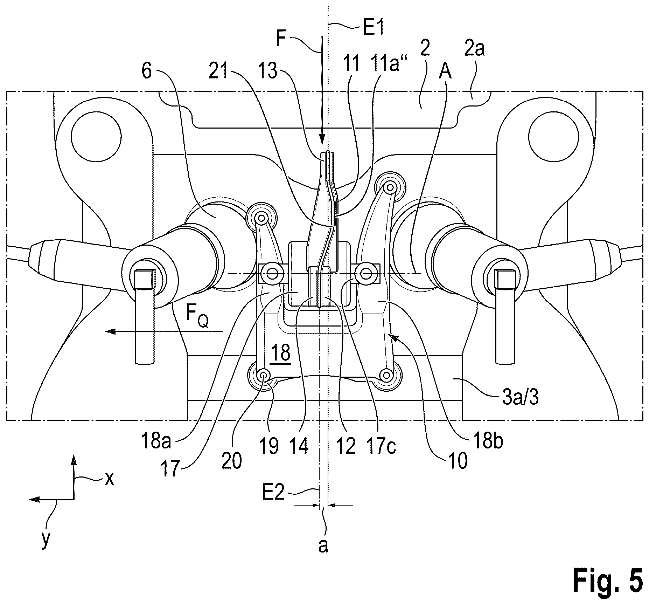

Aufgrund der geometrischen Ausführung des Kragarms 11 wird durch eine in Fahrzeuglängsrichtung x auftretende Crashlast, nämlich besagte Kraft F, eine Last F_{Q} in Fahrzeugquerrichtung y induziert, welche den Kragarm 11 gezielt und gewollt versagen lässt (vgl. Fig. 5).

Wie bereits erwähnt, ist vorliegend der Kragarm 11 in das Aggregatgehäuse 2a integriert, so dass bei der Fahrzeugmontage eine individuelle Befestigung mittels separaten Befestigungsmittel wie beispielsweise Schrauben vermieden wird. Hierdurch wird die Montage der Abstützungsstruktur 10 vereinfacht.

Vorzugsweise ist der Kragarm 11 an das Aggregatgehäuse 2a angegossen. Dies lässt sich beispielsweise in Druckgießverfahren oder auch anderen Gießverfahren ohne großen Zusatzaufwand verwirklichen.

Es ist auch möglich, den Kragarm 11 an das Aggregatgehäuse 2a anzuschweißen. Dies kann der eigentlichen Fahrzeugmontage vorgelagert und gegebenenfalls automatisiert erfolgen, so dass auch in diesem Fall bei der Fahrzeugmontage ein aufwändiger und potentiell störanfälliger Handhabungsschritt unter Verwendung separater Befestigungsmittel entfällt.

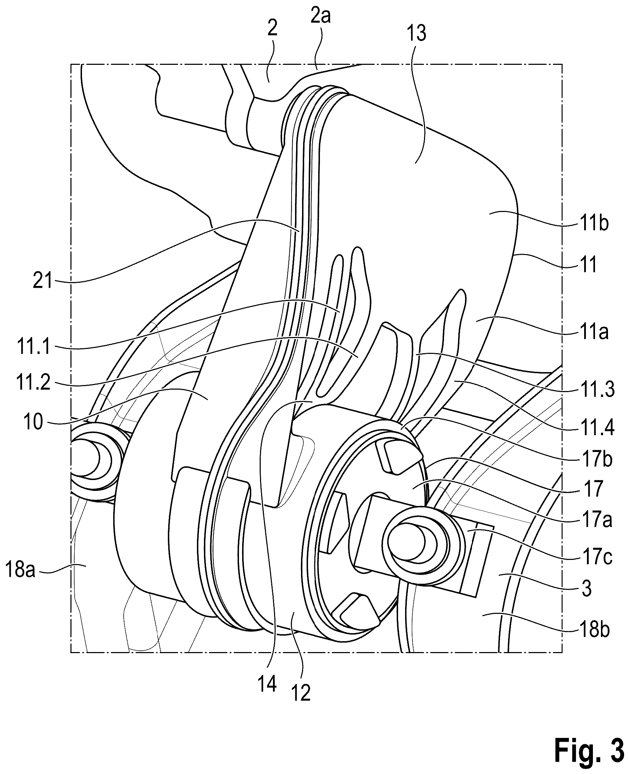

Wie insbesondere Fig. 3 zeigt, kann der Kragarm 11 im Anschlussbereich 13 eine geschlossene flächige Struktur 11b aufweisen, wodurch eine stabile Anbindung an das Aggregatgehäuse 2a erzielt wird. Dies verhindert auch, dass der Kragarm 11 bei einer Längsüberlastung zuverlässig an der Sollbruchstelle oder Sollknickstelle verformt wird und nicht etwa vorzeitig im Anschlussbereich 13 an das Aggregatgehäuse 2a abbricht.

Der Kragarm 11 kann durchgehend als geschlossene flächige Struktur 11b ausgebildet sein. Bei dem in Fig. 3 dargestellten Ausführungsbeispiel fächert die geschlossene flächige Struktur 11b jedoch im Verlauf zum Abstützende 14 hin in mehrere Finger 11.1, 11.2, 11.3, 11.4 auf, zwischen denen Öffnungen ausgebildet sind, welche die geschlossen flächige Struktur 11b durchbrechen. Im Bereich der Finger 11.1, 11.2, 11.3, 11.4 wird der Kragarm 11 nicht mehr als "geschlossen flächig" angesehen.

Vorzugsweise erstreckt sich die geschlossene flächige Struktur 11b, ausgehend von dem Anschlussbereich 13, über zumindest ein Viertel der Länge des Kragarms 11, gemessen vom Anschlussbereich 13 bis zum Abstützende 14. Die Finger 11.1, 11.2, 11.3, 11.4 nehmen vorzugsweise den Rest der Länge ein.

Bei dem in Fig. 3 dargestellten Ausführungsbeispiel ist das Abstützende 14, insbesondere über die Finger 11.1, 11.2, 11.3, 11.4, an den Lagerkörper 12 angebunden.

Die Anbindung des Kragarms 11 am Lagerkörper 12 erfolgt vorzugsweise durch Schweißen. Es ist jedoch auch möglich, zumindest Abschnitte des Lagerkörpers 12 einstückig mit dem Kragarm 11 auszubilden. Insoweit kann auch der Lagerkörper 12 in das Aggregatgehäuse 2a integriert sein.

Der Lagerkörper 12 kann eine Lagerbuchse 17 aufweisen, in der ein Elastomerkörper 17a angeordnet ist.

Vorzugsweise ist der Elastomerkörper 17a innerhalb einer Außenhülse 17b der Lagerbuchse 17 angeordnet und verbindet letztere mit einem Lagerbolzen 17c, welcher axial über den Elastomerkörper 17a hinausragt und mit seinen Endabschnitten am Fahrzeugaufbau 3 festgelegt ist.

Weiterhin kann an dem Kragarm 11 eine Versteifungsrippe 21 vorgesehen sein, welche sich von dem Anschlussbereich 13 zu dem Abstützende 14 erstreckt und gegenüber einer kürzesten Verbindungslinie zwischen dem Anschlussbereich 13 und dem Abstützende 14 eine Wellenform aufweist. Dies ermöglicht eine stabilere Abstützung von Betriebskräften, ohne das gewünschte Brechen oder Ausknicken im Crashfall zu beeinträchtigen.

Der Fahrzeugaufbau 3 wird vorliegend lediglich rein beispielhaft durch eine Komponente desselben, nämlich eine Befestigungskonsole 18 repräsentiert.

Die Befestigungskonsole 18, welche beispielsweise aus einer Druckgusslegierung, insbesondere einer Aluminium-Druckgusslegierung hergestellt sein kann, kann Einrichtungen 19 zur Befestigung am weiteren Kraftfahrzeugaufbau 3 aufweisen. Diese Einrichtungen 19 können beispielsweise Öffnungen zur Aufnahme von Befestigungsbolzen 20 sein.

Bei dem dargestellten Ausführungsbeispiel ist die Befestigungskonsole 18 beispielhaft in der Art einer bogenförmigen Brücke ausgeführt, welche ein am Hilfsrahmen 3a angeordnetes Lenkgetriebe 6 überbrückt. Die Befestigungskonsole 18 ist dabei in Fahrzeuglängsrichtung x sowohl vor als auch hinter dem Lenkgetriebe 6 an dem Hilfsrahmen 3a des Kraftfahrzeugaufbaus 3 festgelegt. Sie kann insbesondere auch zur Festlegung des Lenkgetriebes 6 am Hilfsrahmen 3a dienen.

Weiterhin bildet die Befestigungskonsole 18 einen Lagerbock mit zwei seitlichen Wangen 18a und 18b, zwischen welchen die Lagerbuchse 17 in der Art einer Gabel aufgenommen und abgestützt ist.

Vorzugsweise befindet sich seitlichen Wangen 18a und 18b im Scheitelbereich der durch die Befestigungskonsole 18 gebildeten Brücke.

Die Abstützung der Lagerbuchse 17 an der Befestigungskonsole 18 erfolgt somit elastisch unter Zwischenschaltung des Elastomerkörpers 17a, während der Lagerbolzen 17c, welcher axial über den Elastomerkörper 17a hinausragt, mit seinen Endabschnitten an der Befestigungskonsole 18, insbesondere deren seitlichen Wangen 18a und 18b festgelegt ist.

Der Kragarm 11 ist an dieser Lagerbuchse 17, insbesondere am Außenumfang von deren Außenhülse 17b angeordnet. Dabei steht der Kragarm 11 radial von der Lagerbuchse 17 ab.

Der Kragarm 11 kann beispielsweise an einen Außenumfangsabschnitt der Lagerbuchse 17, insbesondere deren Außenhülse 17b, angeschweißt sein, wie dies in Fig. 3 beispielhaft dargestellt ist. Es ist jedoch auch möglich, die Außenhülse 17b und den Kragarm 11 einstückig miteinander auszubilden.

Ferner ist es möglich, eine Lagerbuchse 17 in einen Kragarm 11 einzupressen, wozu an dem Kragarm 11 eine entsprechende Aufnahmeöffnung vorgesehen wird. Die eingepresste Lagerbuchse 17 kann die vorgenannten Bestandteile 17a, 17b und 17c aufweisen. Es kann jedoch auch ein Elastomerkörper 17a ohne eine Außenhülse 17b unmittelbar in eine Aufnahmeöffnung am Kragarm 11 eingepresst sein.

Die Anbindung des Kragarms 11 an der Befestigungskonsole 18 ist lediglich beispielhafter Natur. Der Kragarm 11 kann auch an einer anderen Kraftfahrzeugaufbaukomponente 3a angebunden sein, insbesondere auch unter Verwendung einer Lagerbuchse 17 am Abstützende 14. Dabei kann der Kragarm 11 an seinem Abstützende 14 wiederum mit einer Lagerbuchse 17 zusammenwirken, deren Lagerachse A quer zur Längserstreckung des Kragarms 11 zwischen dem Anschlussbereich 13 und dem Abstützende 14 ist.

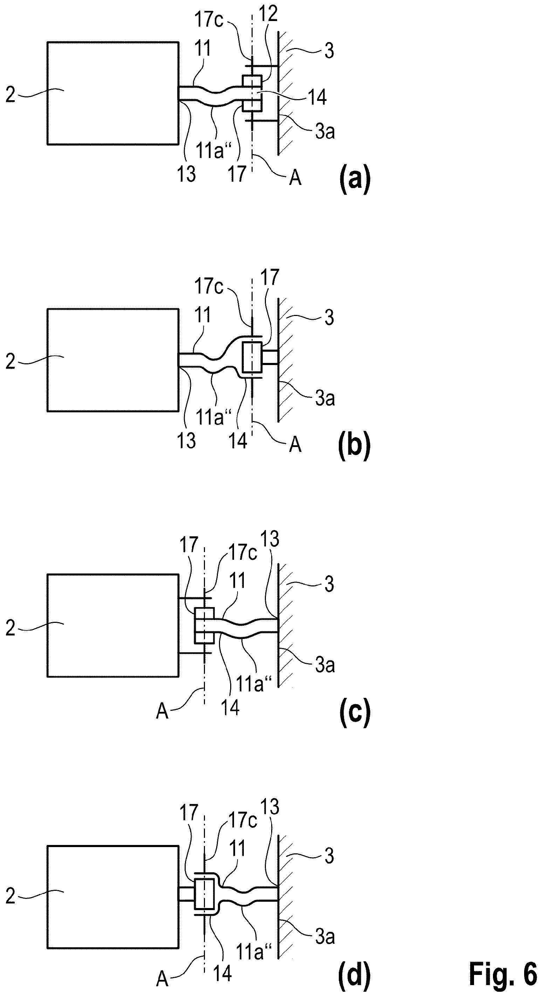

Dieses Anbindungskonzept ist in Fig. 6a nochmals schematisch veranschaulicht. Ferner kann, wie in Fig. 6b dargestellt, die Lagerbuchse 17 jedoch auch aufbauseitig festgelegt sein, wohingegen am Abstützende 14 ein Lagerbolzen 17c befestigt ist, der seinerseits in einem Elastomerkörper 17a der Lagerbuchse elastisch 17 gelagert ist. Zur Aufnahme des Lagerbolzens 17c kann das Abstützende 14 des Kragarms 11 gabelförmig ausgebildet sein.

In Fig. 6a weist somit der Kragarm 11 an seinem Abstützende 14 einen Lagerkörper 12 mit einer Lagerbuchse 17 auf, wobei die Lagerbuchse 17 eine Lagerachse A quer zur Längserstreckung des Kragarms 11 zwischen dem Anschlussbereich 13 und dem Abstützende 14 aufweist.

In Fig. 6b weist der Kragarm 11 an seinem Abstützende 14 eine Gabel mit einem Lagerzapfen 17c auf, wobei der Lagerzapfen 17c sich quer zur Längserstreckung des Kragarms 11 zwischen dem Anschlussbereich 13 und dem Abstützende 14 erstreckt und der Lagerzapfen 17c in einer Außenhülse 17b der Lagerbuchse 17 gelagert ist.

Weiterhin ist es möglich, wie in den Fig. 6c und 6d gezeigt, den Kragarm 11 integral mit der Kraftfahrzeugaufbaukomponente 3a auszubilden oder stoffschlüssig an die Kraftfahrzeugaufbaukomponente anzuschließen, um das Antriebsaggregat 2 an der Kraftfahrzeugaufbaukomponente 3a abzustützen. In diesem Fall steht der Kragarm 11 von der Kraftfahrzeugaufbaukomponente 3a ab und weist zwischen dem Anschlussbereich 13 des Kragarms 11 an der der Kraftfahrzeugaufbaukomponente 3a und einem Abstützende 14 des Kragarms 11, mit welchem der Kragarm 11 am Antriebsaggregat 2 abstützbar ist, eine Geometrieveränderung 11a auf, welche bei einer Längsbelastung des Kragarms 11 in Richtung von dem Abstützende 14 zu dem Anschlussbereich 13 oder umgekehrt eine Sollknickstelle oder Sollbruchstelle bildet, welche bei Überschreiten einer Schwelle für die Längskraft ausknickt oder bricht.

Fig. 6c zeigt analog zu Fig. 6a die Anbringung eines Lagerkörpers 12 mit einer Lagerbuchse 17 am Abstützende 14 und die Festlegung eines Lagerzapfens 17c am Antriebsaggregat 2. In Fig. 6d ist analog zu Fig. 6b diese Anordnung vertauscht, wobei der Kragarm am Abstützende 14 zur Festlegung des Lagerbolzens 17c gegebenenfalls gabelförmig ausgebildet sein kann.

Der crashweiche Kragarm 11 mit Geometrieveränderung 11a zur Induzierung eines Ausknickens oder Brechens kann an die Kraftfahrzeugaufbaukomponente 3a angeformt, angegossen oder angeschweißt und damit in diese integriert sein.

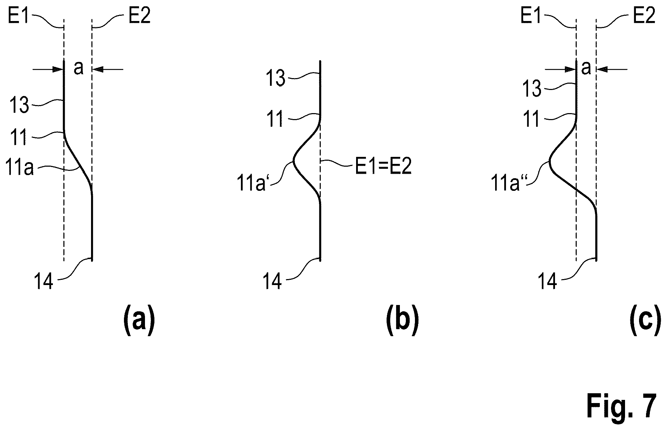

Die Geometrieveränderung 11a, 11a', 11a" des Kragarms 11 kann, wie in Fig. 7 beispielhaft gezeigt, einen wellen- und/oder stufenförmigen Versatz oder Schlag desselben in Richtung der Lagerachse A umfassen, welcher der Einleitung des Ausknickens oder Brechens bei Überlast im Crashfall dient. Dies gilt ausdrücklich für alle vorgenannten Ausführungsbeispiele.

Fig. 7a zeigt einen stufenförmigen Versatz a der Krafteinleitung zwischen dem Anschlussbereich 13 und dem Abstützende 14 dahingehend, dass die Krafteinleitung am Anschlussbereich 13 in einer ersten Ebene E1 senkrecht zur Lagerachse A der Lagerbuchse 17 angeordnet ist, die aggregatseitige Krafteinleitung am Abstützende 14 in einer zweiten Ebene E2 senkrecht zur Lagerachse A angeordnet ist und die erste Ebene E1 und die zweite Ebene E2 zueinander parallel sind und den Versatz a zueinander aufweisen.

Fig. 7b zeigt einen wellenförmigen Schlag, wobei der Anschlussbereich 13 und das Abstützende 14 in einer gemeinsamen Ebene liegen. Anstatt einer Welle können auch mehrerer Wellen vorgesehen sein.

Fig. 7c zeigt schließlich die Kombination aus beidem.

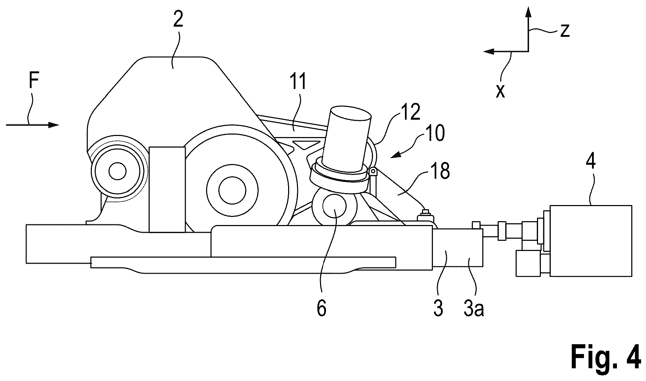

Wie den Fig. 4 und 5 gezeigt, kann der Kragarm 11 in Einbaulage am Kraftfahrzeug 1 von der Traktionsbatterie 4 weg weisend an dem Lagerkörper 12, insbesondere der Lagerbuchse 17 desselben, angeordnet sein.

Vorzugsweise ist die Abstützungsstruktur 10 in Fahrzeughochrichtung z über dem Lenkgetriebe 6 liegend angeordnet. Eine Längsachse A der Lagerbuchse 17 verläuft dabei in Einbaulage in Fahrzeughochrichtung z über dem Lenkgetriebe 6.

Zudem liegt in Bezug auf die Fahrzeughochrichtung z die Lagerachse A der Lagerbuchse 17 bevorzugt auf einem höheren Niveau als eine Oberkante der Traktionsbatterie 4, wie dies in Fig. 4 gezeigt ist.

Die vorstehend erläuterte Ausgestaltung der Abstützungsstruktur 10 mit Kragarm 11 ermöglicht eine crashweiche Abstützung des Antriebsaggregats 2 gegen den Kraftfahrzeugaufbau 3. Durch ein gezielt einstellbares Brechen oder Ausknicken des Kragarms 11 im Crashfall wird eine Beschädigung empfindlicher Komponenten durch das Antriebsaggregat 2 oder durch einen etwaigen Lagerkörper 12 der Abstützungsstruktur 10 vermieden. So kann beispielsweise eine Traktionsbatterie 4 gegen Beschädigungen durch den Lagerkörper 12 einer in Fahrzeuglängsrichtung x zwischen dem Antriebsaggregat 2 und der Traktionsbatterie 4 angeordneten Abstützungsstruktur 10 geschützt werden.

Durch die Integration des crashweichen Kragarms 11 in das Antriebsaggregat 2, insbesondere das Aggregatgehäuse 2a oder in den Kraftfahrzeugaufbau 3, insbesondere in eine Kraftfahrzeugaufbaukomponente 3a, wird der Aufwand in der Fahrzeugmontage erheblich reduziert, indem aufwändige Handhabungsschritte bei der Kopplung von Antriebsaggregat 2 und Kraftfahrzeugaufbau 3 während der Montage entfallen. Dies ist insbesondere in der Serienfertigung von Vorteil.

Aufgrund dieser Maßnahmen ist es nicht erforderlich, entsprechende Abstützungsstrukturen 10 in Fahrzeugquerrichtung y seitlich außen anzuordnen. Vielmehr ist vorliegend eine Abstützung beispielsweise auch allein über eine zentrale Abstützungsstruktur 10 in Fahrzeugmitte möglich.

Überdies kann ein Einbau zusätzlicher Crashelemente zum Schutz der Traktionsbatterie 4 vermieden werden.

Die erfindungsgemäße Ausgestaltung vermeidet somit einen konstruktiven und montagetechnischen Zusatzaufwand, ist kostengünstig und gewichtsparend und kommt ohne zusätzliche Bauteile aus.

Obgleich die Abstützungsstruktur 10 vorstehend im Zusammenhang mit einem Kraftfahrzeug mit elektrischem Antrieb beschrieben wurde, kann eine solche auch in Kraftfahrzeugen mit anderen Antriebskonzepten, beispielsweise Antriebsaggregaten 2 mit Verbrennungsmotor, zum Einsatz kommen, bei welchen empfindliche Komponenten im Crashfall gegen ein Vordringen des Lagerkörpers 12 zusätzlich geschützt werden sollen.

Die Erfindung wurde vorstehend anhand von Ausführungsbeispielen und weiteren Abwandlungen näher erläutert. Insbesondere können technische Einzelmerkmale, welche oben im Kontext weiterer Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele und die Abwandlungen beschränkt, sondern umfasst alle durch die Patentansprüche definierten Ausgestaltungen.

### Bezugszeichenliste

- 1: Kraftfahrzeug
- 2: Antriebsggregat
- 3: Kraftfahrzeugaufbau
- 3a: Kraftfahrzeugaufbaukomponente (z.B. Hilfsrahmen)
- 4: Traktionsbatterie
- 5: elektrische Leitung
- 6: Lenkgetriebe
- 10: Abstützungsstruktur
- 11: Kragarm
- 11a: Geometrieveränderung
- 11b: geschlossene flächige Struktur
- 11.1: Finger
- 11.2: Finger
- 11.3: Finger
- 11.4: Finger
- 12: Lagerkörper
- 13: Anschlussbereich des Kragarms
- 14: Abstützende des Kragarms
- 15: Einrichtungen zur Befestigung des Aggregats
- 16: Befestigungsbolzen
- 17: Lagerbuchse
- 17a: Elastomerkörper
- 17b: Außenhülse
- 17c: Lagerbolzen
- 18: Befestigungskonsole
- 18a: Wange
- 18b: Wange
- 19: Einrichtung zur Befestigung am Kraftfahrzeugaufbau
- 20: Befestigungsbolzen
- 21: Versteifungsrippe
- a: Versatz
- x: Fahrzeuglängsrichtung
- y: Fahrzeugquerrichtung
- z: Fahrzeughochrichtung
- A: Längsachse der Lagerbuchse
- E1: erste Ebene
- E2: zweite Ebene
- F: Kraft
- F_{Q}: induzierte Last, Kraft in Fahrzeugquerrichtung

## Patentansprüche

1. Antriebsaggregat (2) eines Kraftfahrzeugs zur Anordnung an einem Kraftfahrzeugaufbau (3), umfassend
ein Aggregatgehäuse (2a),
**gekennzeichnet durch**
einen integral mit dem Aggregatgehäuse (2a) ausgebildeten oder stoffschlüssig an das Aggregatgehäuse (2a) angeschlossenen Kragarm (11) zur Abstützung des Aggregatgehäuses (2a) gegen den Kraftfahrzeugaufbau (3),
wobei der integral mit dem Aggregatgehäuse (2a) ausgebildete oder stoffschlüssig an dieses angeschlossene Kragarm (11) von dem Aggregatgehäuse (2a) absteht und
wobei der Kragarm (11) zwischen einem Anschlussbereich (13) des Kragarms (11) an das Aggregatgehäuse (2a) und einem Abstützende (14) des Kragarms (11), mit welchem der Kragarm (11) am Kraftfahrzeugaufbau (3) abstützbar ist, eine Geometrieveränderung (11a, 11a', 11a") aufweist, welche bei einer Belastung des Kragarms (11) mit einer Längskraft in Richtung von dem Abstützende (14) zu dem Anschlussbereich (13) oder umgekehrt, eine Sollknickstelle oder Sollbruchstelle bildet, welche bei Überschreiten einer Schwelle für die Längskraft ausknickt oder bricht.

2. Antriebsaggregat (2) nach Anspruch 1, **dadurch gekennzeichnet, dass** der Kragarm (11) an das Aggregatgehäuse (2a) angegossen ist.

3. Antriebsaggregat (2) nach Anspruch 1, **dadurch gekennzeichnet, dass** der Kragarm (11) an das Aggregatgehäuse (2a) angeschweißt ist.

4. Kraftfahrzeugaufbau (3) zur Abstützung eines Antriebsaggregats (2), umfassend eine Kraftfahrzeugaufbaukomponente (3a),
**gekennzeichnet durch**
einen integral mit der Kraftfahrzeugaufbaukomponente (3a) ausgebildeten oder stoffschlüssig an die Kraftfahrzeugaufbaukomponente (3a) angeschlossenen Kragarm (11) zur Abstützung des Antriebsaggregats (2) gegen die Kraftfahrzeugaufbaukomponente (3a),
wobei der integral mit der Kraftfahrzeugaufbaukomponente (3a) ausgebildete oder stoffschlüssig an diese angeschlossene Kragarm (11) von der der Kraftfahrzeugaufbaukomponente (3a) absteht und
wobei der Kragarm (11) zwischen einem Anschlussbereich (13) des Kragarms (11) an der der Kraftfahrzeugaufbaukomponente (3a) und einem Abstützende (14) des Kragarms (11), mit welchem der Kragarm (11) am Antriebsaggregats (2) abstützbar ist, eine Geometrieveränderung (11a, 11a', 11a") aufweist, welche bei einer Belastung des Kragarms (11) mit einer Längskraft in Richtung von dem Abstützende (14) zu dem Anschlussbereich (13) oder umgekehrt eine Sollknickstelle oder Sollbruchstelle bildet, welche bei Überschreiten einer Schwelle für die Längskraft ausknickt oder bricht.

5. Kraftfahrzeugaufbau (3) nach einem der Ansprüche 1 bis 4, **dadurch gekennzeichnet, dass** Kragarm (11) an die Kraftfahrzeugaufbaukomponente (3a) angeformt, angegossen oder angeschweißt ist.

6. Gegenstand nach einem der Ansprüche 1 bis 5, **dadurch gekennzeichnet, dass** der Kragarm (11) im Anschlussbereich (13) eine geschlossene flächige Struktur (11a) aufweist.

7. Gegenstand nach Anspruch 6, **dadurch gekennzeichnet, dass** die geschlossene flächige Struktur (11a) im Verlauf zum Abstützende (14) hin in mehrere Finger (11.1, 11.2, 11.3, 11.4) auffächert.

8. Gegenstand nach Anspruch 6 oder 7, **dadurch gekennzeichnet, dass** die geschlossene flächige Struktur (11a) sich, ausgehend vom Anschlussbereich (13), über mindestens ein Viertel der Länge des Kragarms (11), gemessen vom Anschlussbereich (13) bis zum Abstützende (14), erstreckt.

9. Gegenstand nach einem der Ansprüche 1 bis 8, **dadurch gekennzeichnet, dass** der Kragarm (11) an seinem Abstützende (14) mit einer Lagerbuchse (17) zusammenwirkt, deren Lagerachse (A) quer zur Längserstreckung des Kragarms (11) zwischen dem Anschlussbereich (13) und dem Abstützende (14) ist.

10. Gegenstand nach einem der Ansprüche 1 bis 9, **dadurch gekennzeichnet, dass** besagte Geometrieveränderung (11a, 11a', 11a") des Kragarms (11) einen wellen- und/oder stufenförmigen Versatz und/oder Schlag in Richtung der Lagerachse (A) umfasst.

11. Gegenstand nach einem der Ansprüche 1 bis 10, **dadurch gekennzeichnet, dass** der Kragarm (11) an seinem Abstützende (14) einen Lagerkörper (12) mit einer Lagerbuchse (17) aufweist und die Lagerbuchse (17) eine Lagerachse (A) quer zur Längserstreckung des Kragarms zwischen dem Anschlussbereich (13) und dem Abstützende (14) aufweist.

12. Gegenstand nach einem der Ansprüche 1 bis 11, **dadurch gekennzeichnet, dass** der Kragarm (11) an seinem Abstützende (14) einen Lagerzapfen (17c) aufweist, wobei der Lagerzapfen (17c) sich quer zur Längserstreckung des Kragarms (11) zwischen dem Anschlussbereich (13) und dem Abstützende (14) erstreckt und der Lagerzapfen (17c) in einer Lagerbuchse (17) gelagert ist.

13. Gegenstand nach einem der Ansprüche 1 bis 12, **dadurch gekennzeichnet, dass** die Geometrieveränderung (11a, 11a") einen Versatz (a) der Krafteinleitung zwischen dem Anschlussbereich (13) und dem Abstützende (14) dahingehend bereitstellt, dass die Krafteinleitung am Anschlussbereich (13) in einer ersten Ebene (E1) senkrecht zur Lagerachse (A) der Lagerbuchse (17) angeordnet ist, die aggregatseitige Krafteinleitung am Abstützende (14) in einer zweiten Ebene (E2) senkrecht zur Lagerachse (A) angeordnet ist und die erste Ebene (E1) und die zweite Ebene (E2) zueinander parallel sind und besagten Versatz (a) zueinander aufweisen.

14. Kraftfahrzeug (1), umfassend
ein Antriebsaggregat (2) für den Antrieb des Kraftfahrzeugs (1),
einen Kraftfahrzeugaufbau (3), und
eine Traktionsbatterie (4),
**dadurch gekennzeichnet, dass**
entweder das Antriebsaggregat (2) oder der Kraftfahrzeugaufbau (3) nach einem der vorgenannten Ansprüche ausgebildet sind und das Antriebsaggregat (2) und der Kraftfahrzeugaufbau (3) über den Kragarm (11) miteinander gekoppelt sind,
wobei der Kragarm zwischen dem Antriebsaggregat (2) und der Traktionsbatterie (4) angeordnet ist.

15. Kraftfahrzeug (1) nach Anspruch 14, **dadurch gekennzeichnet, dass** der Kragarm (11) in das Aggregatgehäuse (2) des Antriebsaggregats (2) integriert ist, der Kragarm (11) am Abstützende (14) den Lagerkörper (12) mit der Lagerbuchse (17) aufweist und der Kragarm (11) von der Traktionsbatterie (4) weg weisend an dem Lagerkörper (12) angeordnet ist.
